# EUROPÄISCHE PATENTSCHRIFT

(11) **EP 4 410 671 B1**
(45) Veröffentlichungstag und Bekanntmachung des Hinweises auf die Patenterteilung: **25.06.2025**
(21) Anmeldenummer: 24154200.0
(22) Anmeldetag: 26.01.2024
(51) Int. Cl.: B64D 10/00, B64D 43/00, B64D 47/00

(54) **EXOSKELETTARM-HILFE IM LUFTFAHRZEUGCOCKPIT FÜR HOHE BESCHLEUNIGUNGEN**
EXOSKELETON ARM SUPPORT IN AIRCRAFT COCKPIT FOR HIGH ACCELERATIONS
DISPOSITIF D'AIDE À UN BRAS D'EXOSQUELETTE DANS LE COCKPIT D'AÉRONEF POUR DES ACCÉLÉRATIONS ÉLEVÉES

(30) Priorität: 01.02.2023 DE 102023102424
(43) Veröffentlichungstag der Anmeldung: 07.08.2024
(73) Patentinhaber: Deutsches Zentrum für Luft- und Raumfahrt e.V., 53227 Bonn (DE)
(72) Erfinder: Wolz, Florian, 85077 Manching (DE)
(74) Vertreter: Rösler Rasch van der Heide & Partner

(56) Entgegenhaltungen:
- US-A- 3 302 633
- US-A- 4 967 985
- US-A1- 2020 231 269
- US-A1- 2022 378 645

## Beschreibung

Die Erfindung betrifft ein System zum Unterstützen eines Insassen eines Luftfahrzeugs bei der Cockpit-Bedienung unter hohen Beschleunigungen, sowie ein Luftfahrzeug mit einem solchen System.

In der bemannten Flugführung stehen typischerweise einem Piloten Bedienelemente zum Steuern von Subsystemen seines Luftfahrzeugs zur Verfügung. Solche Bedienelemente betreffen die Kommunikation, die Navigation, Lichter, und je nach Flugzeugtyp Weiteres. Zur Flugsteuerung selbst, d. h. um einen Flugzeugzustand mit Komponenten für die Momentendynamik (Rollbewegung, Nickbewegung, Gierbewegung) und Komponenten für translationale Beschleunigungen und Geschwindigkeiten zu beeinflussen, stehen je nach Konfiguration des Fluggeräts entsprechende Steuerelemente zur Verfügung. Solche Steuerelemente umfassen in Flächenflugzeugen typischerweise einen Steuerknüppel zum Einsteuern von Nick- und Rollbewegungen, sowie einen oder mehrere Schubhebel zum Einstellen einer gewünschten Schubhebelstellung korrelierend mit einem gewünschten Schub des oder der Flugmotoren des Flugzeugs, sowie Pedale zum Einsteuern eines Moments um die Hochachse des Flugzeugs.

Spezielle Konfigurationen von bemannten Luftfahrzeugen weisen häufig Eigenheiten hinsichtlich ihrer Freiheitsgrade in Schub und aerodynamischen Steuerflächen auf, was sich in den Ausführungen der Steuerelemente im Cockpit des bemannten Luftfahrzeugs widerspiegeln kann. Während beispielsweise in Verkehrsflugzeugen von mäßigen Beschleunigungen durch Kurvenflüge etc. auszugehen ist, und daher große und träge zu bedienende Steuerhörner eine ergonomische Möglichkeit darstellen, werden in agilen Kampfflugzeugen durch die Möglichkeit des Abfliegens von engen Kurvenradien mit hohen Geschwindigkeiten Beschleunigungen von 9g und mehr erreicht.

Aber auch die eingangs erwähnten Bedienelemente sind in einer großen Vielfalt je nach Konfiguration und Typ des bemannten Luftfahrzeugs erhältlich. Während in historischen Luftfahrzeugen ausschließlich analoge Instrumente (Anzeigen) und mechanische Schalter und Knöpfe verbaut wurden, kommen in modernen Luftfahrzeugen zunehmend digitale Anzeigen zum Einsatz, welche zumindest teilweise auch die Funktion von Bedienelementen übernehmen können, indem sie als Touchscreens ausgeführt werden.

In allen Fällen ist es jedoch während des Flugs für den Piloten herausfordernd, Instrumente korrekt abzulesen und Bedienelemente korrekt zu bedienen, da quasistatische und dynamisch auftretende Beschleunigungen wie Lastvielfache durch Böen, Vibrationen von Antrieben wie Rotoren, Propeller, Verbrennungskraftmaschinen und Ähnlichem die Koordination des Piloten bzw. des Copiloten erschweren.

Insbesondere in besonders agilen Luftfahrzeugen wie Kampfflugzeugen (Abfangjäger, Mehrzweckkampfflugzeuge, Luftüberlegenheitsjäger) oder Kunstflugzeugen ist der Pilot in Manövern wie im militärisch Jargon so genannten Dogfight hohen Beschleunigungen ausgesetzt. Diese Beschleunigungen sind nicht nur auf die Sitzfläche des Pilotensitzes hin gerichtet, sodass der Pilot um ein Vielfaches der gewöhnlichen Erdbeschleunigung in den Sitz gedrückt wird, sondern können durch das Abnicken des Luftfahrzeugs auch vom Pilotensitz weg gerichtet sein. Aber auch hohe Seitenbeschleunigungen können auf den Piloten wirken, beispielsweise beim schnellen Aufbauen oder Abbauen hoher Rollraten um eine Längsachse des Luftfahrzeugs, und in seltenen Fällen für spezielle Konfigurationen prinzipiell auch in einer Gierbewegung.

Solche quasi-statischen Beschleunigungen und Vibrationen können eine manuelle Bedienung des Cockpits für eingangs erwähnte Bedienelemente und Steuerelemente wie Steuerknüppel und Schubhebel erheblich erschweren, da nicht nur höherfrequente Vibrationen negativ in die Auge-Hand-Koordination des Piloten eingreifen, sondern auch die quasi-statischen Beschleunigungen mit einem vielfachen der Erdbeschleunigung erhebliche Muskelarbeit dem Piloten abverlangen, um die Trägheitskraft von Arme und Hände gegen die wirkende Beschleunigung zu kompensieren. Dies wirkt auf den Piloten belastend und über längere Zeit hin ermüdend. Bei solch hohen Beschleunigungen, die auf den Körper des Piloten wirken, ist auch eine Sprachsteuerung kaum mehr realisierbar, da hierbei eine klare Sprache ebenfalls erschwert wird bis hin zur Unmöglichkeit der Aussprache von gewöhnlichen Phrasen. Während im Stand der Technik aus diesen Gründen und zur Minimierung der Reaktionszeit des Piloten bei der Bedienung der Mensch-Maschine-Schnittstelle bekanntermaßen (und daher ohne einen konkretes Dokument aus dem Stand der Technik zu nennen) typischerweise ein Cockpit nach dem HOTAS Prinzip (HOTAS ist eine Abkürzung für "Hands on Throttle and Stick") insbesondere in Kampfflugzeugen verwendet wird, sind zunehmend wegen der hohen Funktionalität und der zunehmenden Komplexität von militärischen Luftfahrzeugen auch Touchscreens im Einsatz. Komplexe Bedieneingaben sind nämlich nach dem HOTAS Prinzip ebenfalls nur schwer möglich, da zu wenige Freiheitsgrade durch Knöpfe und Mini-Joysticks an Schubhebel und/oder Steuerknüppel zur Verfügung stehen, bzw. diese zur umständlichen Bedienung führen. Die ebenfalls im militärischen Bereich häufig verwendeten Anti-G Anzüge für die Piloten helfen zwar bei der Aufrechterhaltung des Blutkreislaufes und somit der Sauerstoffversorgung von Gewebe und Gehirn und somit der Vitalfunktionen, können jedoch nicht die Trägheitskräfte auf die Gliedmaßen bei der Bedienung des Cockpits vermindern. Dasselbe gilt für die häufig angewendete Pressatmung während hoher Beschleunigungen.

Es ist daher Aufgabe der Erfindung, die manuelle Bedienung eines Cockpits eines bemannten hochagilen oder anderweitig hohen Beschleunigungen ausgesetzten Luftfahrzeugs für einen Insassen, insbesondere den Piloten bzw. den Copiloten, zu vereinfachen.

US 4 967 985 A offenbart ein Unterstützungssystem für die Flugzeugbesatzung zum Stützen des Kopfes und gegebenenfalls des Rumpfes eines Piloten während Manövern mit hoher Schwerkraft, das es ihm ermöglicht, seinen Kopf in einer aufrechten Position zu halten und dadurch sein Bewusstsein für die Situation außerhalb des Cockpits jederzeit zu verbessern.US 2020/231269 A1 offenbart eine Fluganordnung und ein Segelflugzeug mit zweiseitigen, flexiblen und zusammenklappbaren Flügeln und ein zugehöriges Flugverfahren.

Die Erfindung ergibt sich aus den Merkmalen des unabhängigen Anspruchs 1. Vorteilhafte Weiterbildungen und Ausgestaltungen sind Gegenstand der abhängigen Ansprüche.

Ein erster Aspekt der Erfindung betrifft ein System zum Unterstützen eines Insassen eines Luftfahrzeugs bei der Cockpit-Bedienung unter hohen Beschleunigungen, aufweisend eine Recheneinheit, eine inertiale Messeinheit, und einen Exoskelettarm mit einer Vielzahl von Gelenken und Aktoren und Lagerflächen für das Abstützen eines Arms des Insassen, wobei die inertiale Messeinheit dazu ausgeführt ist, kinematische Daten des Luftfahrzeugs zu erfassen und an die Recheneinheit zu übermitteln, wobei die Recheneinheit dazu ausgeführt ist, aus den erfassten kinematischen Daten der inertialen Messeinheit eine Beschleunigung am Pilotensitz zu ermitteln und die Aktoren des Exoskelettarms zum Erzeugen einer der ermittelten Beschleunigung am Pilotensitz entgegengerichteten Gegenkraft in einer Höhe anzusteuern, die die Trägheitskräfte des Arms des Insassen aufgrund der ermittelten Beschleunigung am Pilotensitz kompensiert.

Der Insasse ist erwartbar in den meisten Fällen ein Pilot. Gemäß der gebräuchlichen Wendung, den Piloten auch als "Pilot flying" und den Copiloten als "Pilot not flying" zu bezeichnen, betrifft im Obigen und im Folgenden der Begriff des Piloten sowohl einen Piloten als auch einen Copiloten, sowie einen Waffensystemoffizier. In Kampfflugzeugen ist es nicht unüblich, dass eine zwei-Mann-Besatzung hintereinander sitzend angeordnet wird, in manchen wenigen Fällen von Kampfflugzeugen und Hubschraubern auch nebeneinander.

Die kinematischen Daten der inertialen Messeinheit umfassen bevorzugt Beschleunigungen und/oder Drehraten des Luftfahrzeugs. Besonders bevorzugt umfassen die kinematischen Daten der inertialen Messeinheit beides, sowohl Beschleunigungen als auch Drehraten des Luftfahrzeugs und weiterhin besonders bevorzugt sowohl translationale als auch rotatorische Beschleunigungen des Luftfahrzeugs. Dies ist insbesondere dann von Nutzen, wenn die inertiale Messeinheit im Bereich eines erwarteten Schwerpunkts des Luftfahrzeugs angeordnet ist, d. h. typischerweise mit einer Distanz zumindest in Längsrichtung des Luftfahrzeugs zum Pilotensitz hin. Wird eine solche Anordnung der inertialen Messeinheit verwendet, so kann einerseits das stationäre Lastvielfache des Luftfahrzeugs im stationären Kurvenflug alleine durch die translatorische Beschleunigung (wie sie in der inertialen Messeinheit gemessen wird) unmittelbar auf den Pilotensitz übertragen werden, wird jedoch auch eine Nickbewegung im Luftfahrzeug aufgebaut, so ist diese translatorische Beschleunigung gemessen im Schwerpunkt des Luftfahrzeugs nicht ausreichend, da der Radius zwischen der inertialen Messeinheit im oder nahe des Schwerpunkts des Luftfahrzeugs hin zum Pilotensitz einen Radius einer Kreisbewegung des Pilotensitzes um den Schwerpunkt des Luftfahrzeugs bei der auftretenden Rotation des Luftfahrzeugs darstellt. Durch die Kenntnis dieses Radius und der Rotationsbewegung des Luftfahrzeugs kann jedoch auch somit auf die endgültig resultierende Beschleunigung am Pilotensitz geschlossen werden. Dies ist Aufgabe der Recheneinheit. Je nachdem, in welchen Lagewinkeln die inertiale Messeinheit relativ zur übrigen Struktur des Luftfahrzeugs am Luftfahrzeug angeordnet ist und welchen Abstand sie zum Pilotensitz aufweist, sind verschiedene kinematische Daten notwendig, um den resultierenden Beschleunigungsvektor am Pilotensitz ermitteln zu können. Es wird daher allgemein von kinematischen Daten gesprochen, da es von der jeweiligen Situation abhängig ist, welche konkreten kinematische Daten notwendig sind, um den Beschleunigungsvektor, wie er durch alle Bewegungszustände des Luftfahrzeugs bestimmt wird, ermitteln zu können.

Die inertiale Messeinheit weist zu diesem Zweck entsprechend der oben genannten Anforderungen bestimmte Sensoren auf, beispielsweise Gyroskope zur Orientierungsbestimmung (d. h. der Lagewinkel des Luftfahrzeugs) und von Drehraten, und für die Ermittlung von Beschleunigungen entsprechende Beschleunigungssensoren. Wird die regulär im Luftfahrzeug verbaute inertiale Messeinheit für die Zwecke von Flugregelung und zur Einholung von Informationen über den aktuellen Flugzustand zur Anzeige an Instrumenten des Cockpits auch für die genannten Zwecke zur Ermittlung des Beschleunigungsvektors am Pilotensitz zur Ermittlung der Gegenkraft für den Exoskelettarm verwendet, sind typischerweise diese Arten von Sensoren ohnehin verbaut.

Der Exoskelettarm weist eine Vielzahl von Aktoren und Gelenken auf. Bevorzugt sind die Gelenke in ihren Freiheitsgraden und ihrer Position denen des menschlichen Arms des Insassen nachgebildet. So weist bevorzugt der Exoskelettarm ein Schultergelenk auf, welches beispielsweise als Kugelgelenk ausgeführt um einen punktförmigen Lagerpunkt rotierbar ist. Ferner ist bevorzugt ein Ellenbogengelenk vorgesehen, sodass der abgestützte Unterarm am Exoskelettarm auch im Freiheitsgrad des Ellenbogens beweglich ist, sodass ein Winkel zwischen Oberarm und Unterarm einstellbar ist. Dies erlaubt vorteilhaft dem Insassen eine natürliche Bewegung seines im Exoskelettarm aufgenommenen menschlichen Armes, um in gewohnter Weise das Cockpit des Luftfahrzeugs bedienen zu können, lediglich mit der Unterstützung durch die Gegenkraft, welche durch die Aktoren des Exoskelettarms erzeugt wird. Diese Gegenkraft ist bevorzugt so in Richtung und Betrag geartet, dass jede zusätzliche sonst erforderliche Kraft des Insassen zum Überwinden der auf seinen Arm wirkenden Trägheitskraft, welche durch Flugmanöver auf gekrümmten Bahnen hervorgerufen wird, in Richtung und Höhe ausgeglichen wird, und der Pilot wahlweise die Arme in einer künstlichen Schwerelosigkeit oder gegen das Einfache der Erdbeschleunigung halten muss.

Die Aktoren sind bevorzugt elektrische Aktoren, da diese die leichteste Ausführung bezüglich Steuerbarkeit und nötigem Drehmoment bieten können. Um das Moment/Kraft der Aktoren als Gegenkraft entsprechend auf den menschlichen Arm des Insassen übertragen zu können, sind an dem Exoskelettarm Lagerflächen vorgesehen, die Kontaktflächen zwischen Exoskelettarm und dem menschlichen Arm bilden. Über diese Kontaktflächen können Kräfte übertragen werden; bevorzugt sind diese Kontaktflächen entsprechend gepolstert, dennoch aber steif genug, um in ausreichend hohen Bandbreiten Kräfte übertragen zu können.

Alternativ bevorzugt werden hydraulische Aktoren verwendet, wobei vorteilhaft kein separates Hydrauliksystem zur Erzeugung von Hydraulikdruck vorzusehen ist, sondern auf das bestehende Hydrauliksystem des Luftfahrzeugs zurückgegriffen werden kann.

Der Exoskelettarm wird somit bevorzugt umschließend an den menschlichen Arm des Insassen angelegt, und folgt daher in seinen geometrischen Verlauf bevorzugt den Abmessungen des menschlichen Arms. Während prinzipiell ein einziger Exoskelettarm mit der erläuterten Funktion in einem Luftfahrzeug verbaut werden kann, um einen menschlichen Arm des Insassen bei hohen Beschleunigungen des Luftfahrzeugs wie in schnellen Kurvenflügen zu unterstützen, werden bevorzugt zwei Exoskelettarme je Pilot vorgesehen, sodass dieser mit beiden Armen das Cockpit unterstützt bedienen kann.

Es ist eine vorteilhafte Wirkung der Erfindung, dass durch das somit erhaltene ermüdungsfreiere Bedienen und Steuern eines Luftfahrzeugs die sogenannte "Situational Awareness" gesteigert werden kann und die Reaktionszeit des Insassen des Luftfahrzeugs reduziert werden kann; eine Ermüdung durch extreme Kraftanstrengung während erhöhter Beschleunigungen insbesondere quasi-statischer Natur kann vermindert werden, die Leistungsfähigkeit und die Konzentrationsfähigkeit auf das Geschehen somit gesteigert werden. Durch den Einsatz eines aktiv unterstützenden Exoskeletts für Schulter, Oberarme und/Unterarme bzw. der Hand muss der Pilot weniger Kraftanstrengung aufbringen, wodurch der Pilot weniger ermüdet. Auch für Raumfahrzeuge, die von der Erde aus starten, kann das System verwendet werden. Die Raumfahrzeuge sind keine Luftfahrzeuge im engeren Sinne, sollen jedoch innerhalb dieser Schrift als solche betrachtet werden, da sie ebenfalls hohe Beschleunigungen aufweisen können und beim Start oder für die Landung auf der Erde nach dem Wiedereintritt in die Erdatmosphäre durch diese fliegen.

Gemäß einer vorteilhaften Ausführungsform ist am Exoskelettarm eine inertiale Arm-Messeinheit angeordnet und dazu ausgeführt, kinematische Daten des Exoskelettarms zu ermitteln und an die Recheneinheit zu übermitteln, wobei die Recheneinheit dazu ausgeführt ist, aus den mittels der inertialen Messeinheit erfassten kinematischen Daten des Luftfahrzeugs sowie aus den mittels der inertialen Arm-Messeinheit erfassten kinematischen Daten des Exoskelettarms die Gegenkraft zu ermitteln und die Aktoren des Exoskelettarms zum Aufbringen der ermittelten Gegenkraft anzusteuern.

Gemäß dieser Ausführungsform werden sowohl die inertiale Messeinheit des Luftfahrzeugs zur Ermittlung von flugzeugbezogenen kinematischen Daten und die inertiale Arm-Messereinheit zu Ermittlung von Exoskelettarm-bezogenen kinematischen Daten gemeinsam dazu verwendet, um Höhe und Richtung der Gegenkraft zu ermitteln. Bevorzugt dient die Berechnung der Beschleunigung am Pilotensitz mithilfe der inertialen Messeinheit des Luftfahrzeugs als Vorsteuersignal für die Gegenkraft, während die tatsächlich gemessene Beschleunigung durch die inertiale Arm-Messeinheit für Korrekturen und einen Regelungskreis verwendet werden kann, um die Vorsteuerung zu korrigieren und zu präzisieren.

Bevorzugt ist eine erste inertiale Arm-Messeinheit im Bereich des menschlichen Oberarms je Exoskelettarm angeordnet, und eine zweite inertiale Arm-Messeinheit im Bereich des menschlichen Unterarms je Exoskelettarm. Wiederum betreffen die kinematischen Daten der inertialen Arm-Messeinheit analog zur inertialen Messeinheit des Luftfahrzeugs bevorzugt Beschleunigungen, insbesondere translatorische Beschleunigungen. Drehraten sind bei direkter Messung von translatorischen Beschleunigungen an der einen oder mehreren inertialen Arm-Messeinheiten dann nicht notwendig, wenn ausreichende Informationen über lokal auftretende translatorische Beschleunigungen zur Verfügung stehen.

Gemäß einer weiteren vorteilhaften Ausführungsform weist der Exoskelettarm Bio-Sensoren auf, die dazu ausgeführt sind, Aktionspotenziale des Insassen zu ermitteln und an die Recheneinheit zu übertragen, wobei die Recheneinheit dazu ausgeführt ist, auf Basis der von den Bio-Sensoren ermittelten Aktionspotenziale eine vom Insassen gewünschte Bewegung des Exoskelettarms zu ermitteln und die Aktoren überlagert zur Gegenkraft zum Aufbringen einer Kraft und/oder eines Moments zum Ausführen der gewünschten Bewegung des Exoskelettarms anzusteuern.

Diese Bio-Sensoren dienen insbesondere dazu, eine gewünschte Bewegung des Insassen zu Beginn der Ausführung der Bewegung bereits zu ermitteln und entsprechend mithilfe der Aktoren die Bewegung so zu unterstützen, dass der Exoskelettarm mitgeführt wird und somit für den Insassen praktisch nicht mehr spürbar ist. Eine dafür notwendige Kraft bzw. ein Moment der Aktoren wird dann der ermittelten Gegenkraft überlagert aufgebracht.

Gemäß einer weiteren vorteilhaften Ausführungsform ist die Recheneinheit dazu ausgeführt, eine Richtung im Raum der am Pilotensitz auftretenden Beschleunigung zu ermitteln und die Gegenkraft entlang dieser Richtung zu bestimmen und die Aktoren des Exoskelettarms entsprechend anzusteuern. Indem die Beschleunigung als räumlicher Vektor mit drei Komponenten eines kartesischen Koordinatensystems ermittelt wird, ist es möglich, eine Gegenkraft ebenfalls mit räumlicher Ausrichtung zu ermitteln und aufzubringen. Dies erhöht zwar die Komplexität der nötigen Ausführungen der Aktoren und der Gelenke des Exoskelettarms, erlaubt jedoch eine vollständig unterstützte Bewegung des menschlichen Pilotenarms.

Gemäß einer weiteren vorteilhaften Ausführungsform weist das System weiterhin ein optisches Tracking-System auf, das dazu ausgeführt ist, eine aktuelle Position und/oder Geschwindigkeit des Exoskelettarms relativ zum Cockpit zu erfassen und an die Recheneinheit zu übermitteln, wobei die Recheneinheit dazu ausgeführt ist, auf Basis der ermittelten Position und/oder Geschwindigkeit des Exoskelettarms eine Bewegung des Exoskelettarms und/oder die Gegenkraft nachzuregeln.

Gemäß einer weiteren vorteilhaften Ausführungsform ist die inertiale Messeinheit zur Anordnung im Luftfahrzeug mit einer Distanz zum Pilotensitz entlang einer Längsachse des Luftfahrzeugs vorgesehen, wobei die Recheneinheit dazu ausgeführt ist, mittels der bekannten Distanz und aus den kinematischen Daten der inertialen Messeinheit die Beschleunigungen am Pilotensitz zu errechnen. Diese Komponente der endgültig resultierenden Beschleunigung am Pilotensitz wird insbesondere aus der Nickrate des Luftfahrzeugs und aus dem Hebelarm zwischen Pilotensitz und Schwerpunkt des Luftfahrzeugs sowie weiterhin bevorzugt aus der Ableitung der Nickrate des Luftfahrzeugs ermittelt. Dieser Komponente überlagert sind ferner die translatorischen Beschleunigungen durch beispielsweise Kurvenflug sowie weitere Beschleunigungen wie durch eine veränderte Rollbewegung des Luftfahrzeugs zu berücksichtigen.

Gemäß einer weiteren vorteilhaften Ausführungsform weist der Exoskelettarm jeweilige Lagerflächen für einen Oberarm und einen sich am Oberarm anschließenden Unterarm auf.

Gemäß einer weiteren vorteilhaften Ausführungsform weist der Exoskelettarm Gelenke mit Freiheitsgraden auf, die analog zu den Freiheitsgraden der menschlichen Schulter und des menschlichen Ellenbogens ausgeführt sind, sodass für den im Exoskelettarm aufgenommenen Arm des Insassen sämtliche durch seine Freiheitsgrade in Schulter und Ellenbogen mögliche Bewegungen durch den Exoskelettarm ebenfalls möglich sind und durch die Aktoren des Exoskelettarms gegen die ermittelte Beschleunigung durch die Gegenkraft unterstützt werden.

Ein weiterer Aspekt der Erfindung betrifft ein Luftfahrzeug mit einem System wie oben und im Folgenden beschrieben.

Gemäß einer weiteren vorteilhaften Ausführungsform weist das Luftfahrzeug einen ersten und einen zweiten Exoskelettarm auf, wobei der jeweilige Exoskelettarm auf Schulterhöhe hinter der Insassensitz-Lehne an der Luftfahrzeugstruktur gelagert ist.

Vorteile und bevorzugte Weiterbildungen des vorgeschlagenen Luftfahrzeugs ergeben sich durch eine analoge und sinngemäße Übertragung der im Zusammenhang mit dem vorgeschlagenen System vorstehend gemachten Ausführungen.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigen:
- Fig. 1:: Ein System zum Unterstützen eines Piloten eines Luftfahrzeugs bei der Cockpit-Bedienung unter hohen Beschleunigungen gemäß einem Ausführungsbeispiel der Erfindung.
- Fig. 2:: Ein Luftfahrzeug mit einem System nach Fig. 1 gemäß einem Ausführungsbeispiel der Erfindung.

Die Darstellungen in den Figuren sind schematisch und nicht maßstäblich.

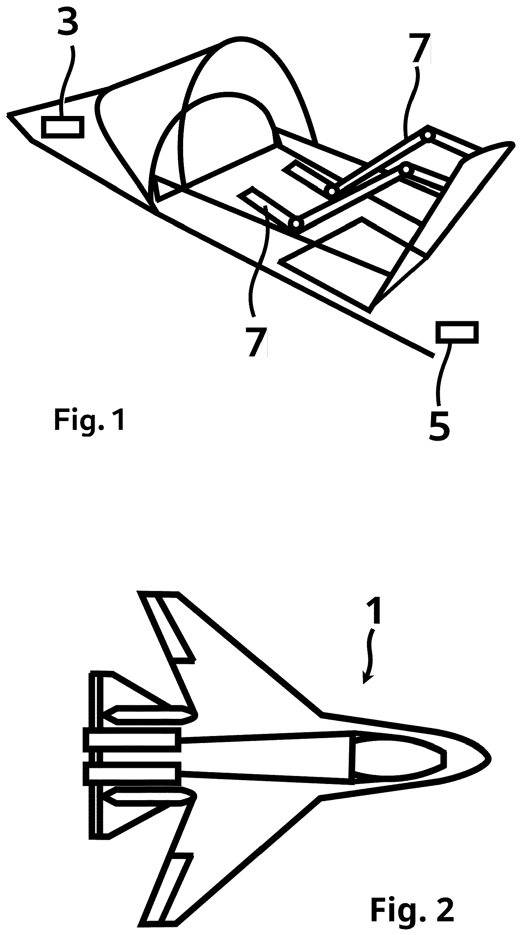

Fig. 1 zeigt ein System zum Unterstützen eines Piloten eines einsitzigen Kampf-Luftfahrzeugs 1 bei der Cockpit-Bedienung unter hohen Beschleunigungen. Gezeigt ist ein Cockpit des Luftfahrzeugs 1 der Fig. 2 mit Hauptflugrichtung nach links oben in der Zeichenebene der Fig. 1, wobei die Frontscheibe und ein Instrumentenboard angedeutet sind. Weiter rechts unten in der Zeichnung ist der Pilotensitz dargestellt. Das System zum Unterstützen des Piloten weist dabei Folgendes auf: Eine Recheneinheit 3, eine inertiale Messeinheit 5, und einen ersten und zweiten Exoskelettarm 7 mit jeweils einer Vielzahl von Gelenken und Aktoren und Lagerflächen für das Abstützen eines jeweiligen Arms des Piloten. Die inertiale Messeinheit 5 ist fest mit der Flugzeugstruktur verbunden und dient dazu, translatorische sowie rotatorische Beschleunigungen, Lagewinkel sowie körperfeste Drehraten des Luftfahrzeugs 1 jeweils mit Bezug um einen Punkt möglichst nahe seines Schwerpunkts (der Schwerpunkt des Luftfahrzeugs 1 verändert sich grundsätzlich abhängig von Betankung und Beladung) zu ermitteln. Diese kinematischen Daten des Luftfahrzeugs 1 werden an die Recheneinheit 3 übermittelt, die wiederum dazu dient, aus den erfassten kinematischen Daten der flugzeugfesten inertialen Messeinheit 5 eine Beschleunigung am Pilotensitz zu ermitteln, aus dieser Beschleunigung eine von der Armmasse des jeweiligen Pilotenarms abhängige Gegenkraft zu ermitteln und die Aktoren des Exoskelettarms 7 zum Erzeugen einer der ermittelten Beschleunigung am Pilotensitz entgegengerichteten Gegenkraft in einer Höhe anzusteuern, die die Trägheitskräfte des Arms des Piloten aufgrund der ermittelten Beschleunigung am Pilotensitz kompensiert. Die Masse des jeweiligen Pilotenarms kann voreingestellt werden, bevorzugt jedoch durch einen Masseschätzer während des Flugs angepasst werden. Eine entsprechend schnelle Konvergenz des Masseschätzer-Algorithmus wird dabei vorausgesetzt. Dies kann mittels Schwerkraftmessung am Boden oder dynamisch während des Flugs mit Hilfe der kinematischen Daten der inertialen Messeinheit 5 erfolgen. Alternativ hierzu wird mithilfe der inertialen Arm-Messeinheiten, die an jedem der Exoskelettarm 7 angeordnet sind, entsprechend nachgeregelt, um unerwünschte Beschleunigung an Störgrößen auszuregeln. Diese inertialen Arm-Messeinheiten sind am jeweiligen Exoskelettarm 7 angeordnet und dienen dazu, kinematische Daten in Form von absoluten translatorischen Beschleunigungen des Exoskelettarms 7 zu ermitteln und wiederum an die Recheneinheit 3 zu übermitteln. Der jeweilige Exoskelettarm 7 ist auf Schulterhöhe hinter dem Piloten an der Flugzeugstruktur gelagert und weist Schulter-Gelenke und Ellbogengelenke zur Darstellung von Freiheitsgraden auf, die analog zu den Freiheitsgraden der menschlichen Schulter und des menschlichen Ellenbogens ausgeführt sind, sodass der im Exoskelettarm 7 aufgenommene Arm des Piloten sämtliche durch seine Freiheitsgrade in Schulter und Ellenbogen möglichen Bewegungen durch den Exoskelettarm 7 ebenfalls möglich sind und durch die Aktoren des Exoskelettarms 7 gegen die ermittelte Beschleunigung durch die Gegenkraft unterstützt werden.

Fig. 2 zeigt das Luftfahrzeug 1 mit dem System nach Fig. 1 aus einer Oberansicht.

Obwohl die Erfindung im Detail durch bevorzugte Ausführungsbeispiele näher illustriert und erläutert wurde, ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen, beispielsweise hinsichtlich der Funktion oder der Anordnung einzelner, in einer beispielhaften Ausführungsform genannter Elemente, vornehmen kann, ohne den Schutzbereich zu verlassen, der durch die Ansprüche definiert wird.

### Bezugszeichenliste

- 1: Luftfahrzeug
- 3: Recheneinheit
- 5: inertiale Messeinheit
- 7: Exoskelettarm

## Patentansprüche

1. System zum Unterstützen eines Insassen eines Luftfahrzeugs (1) bei der Cockpit-Bedienung unter hohen Beschleunigungen, aufweisend eine Recheneinheit (3), eine inertiale Messeinheit (5), und einen Exoskelettarm (7) mit einer Vielzahl von Gelenken und Aktoren und Lagerflächen für das Abstützen eines Arms des Insassen, wobei die inertiale Messeinheit (5) dazu ausgeführt ist, kinematische Daten des Luftfahrzeugs (1) zu erfassen und an die Recheneinheit (3) zu übermitteln, wobei die Recheneinheit (3) dazu ausgeführt ist, aus den erfassten kinematischen Daten der inertialen Messeinheit (5) eine Beschleunigung am Pilotensitz zu ermitteln und die Aktoren des Exoskelettarms (7) zum Erzeugen einer der ermittelten Beschleunigung am Pilotensitz entgegengerichteten Gegenkraft in einer Höhe anzusteuern, die die Trägheitskräfte des Arms des Insassen aufgrund der ermittelten Beschleunigung am Pilotensitz kompensiert.

2. System nach Anspruch 1,
wobei am Exoskelettarm (7) eine inertiale Arm-Messeinheit angeordnet ist und dazu ausgeführt ist, kinematische Daten des Exoskelettarms (7) zu ermitteln und an die Recheneinheit (3) zu übermitteln, wobei die Recheneinheit (3) dazu ausgeführt ist, aus den mittels der inertialen Messeinheit erfassten kinematischen Daten (5) des Luftfahrzeugs (1) sowie aus den mittels der inertialen Arm-Messeinheit erfassten kinematischen Daten des Exoskelettarms (7) die Gegenkraft zu ermitteln und die Aktoren des Exoskelettarms (7) zum Aufbringen der ermittelten Gegenkraft anzusteuern.

3. System nach einem der vorhergehenden Ansprüche,
wobei der Exoskelettarm (7) Bio-Sensoren aufweist, die dazu ausgeführt sind, Aktionspotenziale des Insassen zu ermitteln und an die Recheneinheit (3) zu übertragen, wobei die Recheneinheit (3) dazu ausgeführt ist, auf Basis der von den Bio-Sensoren ermittelten Aktionspotenzialen eine vom Insassen gewünschte Bewegung des Exoskelettarms (7) zu ermitteln und die Aktoren überlagert zur Gegenkraft zum Aufbringen einer Kraft und/oder eines Moments zum Ausführen der gewünschten Bewegung des Exoskelettarms (7) anzusteuern.

4. System nach einem der vorhergehenden Ansprüche,
wobei die Recheneinheit (3) dazu ausgeführt ist, eine Richtung im Raum der am Pilotensitz auftretenden Beschleunigung zu ermitteln und die Gegenkraft entlang dieser Richtung zu bestimmen und die Aktoren des Exoskelettarms (7) entsprechend anzusteuern.

5. System nach einem der vorhergehenden Ansprüche,
weiterhin aufweisend ein optisches Tracking-System, das dazu ausgeführt ist, eine aktuelle Position und/oder Geschwindigkeit des Exoskelettarms (7) relativ zum Cockpit des Luftfahrzeugs (1) zu erfassen und an die Recheneinheit (3) zu übermitteln, wobei die Recheneinheit (3) dazu ausgeführt ist, auf Basis der ermittelten Position und/oder Geschwindigkeit des Exoskelettarms (7) eine Bewegung des Exoskelettarms (7) und/oder die Gegenkraft nachzuregeln.

6. System nach einem der vorhergehenden Ansprüche,
wobei die inertiale Messeinheit (5) zur Anordnung im Luftfahrzeug (1) mit einer Distanz zum Pilotensitz entlang einer Längsachse des Luftfahrzeugs (1) vorgesehen ist, wobei die Recheneinheit (3) dazu ausgeführt ist, mittels der bekannten Distanz und aus den kinematischen Daten der inertialen Messeinheit (5) die Beschleunigungen am Pilotensitz zu errechnen.

7. System nach einem der vorhergehenden Ansprüche,
wobei der Exoskelettarm (7) jeweilige Lagerflächen für einen Oberarm und einen sich am Oberarm anschließenden Unterarm aufweist.

8. System nach Anspruch 7,
wobei der Exoskelettarm (7) Gelenke mit Freiheitsgraden aufweist, die analog zu den Freiheitsgraden der menschlichen Schulter und des menschlichen Ellenbogens ausgeführt sind, sodass für den im Exoskelettarm (7) aufgenommenen Arm des Insassen sämtliche durch seine Freiheitsgrade in Schulter und Ellenbogen mögliche Bewegungen durch den Exoskelettarm (7) ebenfalls möglich sind und durch die Aktoren des Exoskelettarms (7) gegen die ermittelte Beschleunigung durch die Gegenkraft unterstützt werden.

9. Luftfahrzeug (1) mit einem System nach einem der vorhergehenden Ansprüche.

10. Luftfahrzeug (1) nach Anspruch 9,
wobei das Luftfahrzeug (1) einen ersten und einen zweiten Exoskelettarm (7) aufweist, wobei der jeweilige Exoskelettarm (7) auf Schulterhöhe hinter einem Insassensitz an der Luftfahrzeugstruktur gelagert ist.

## Claims

1. A system to assist an occupant of an aircraft during cockpit operation under high accelerations, wherein the system comprises:
an exoskeleton arm comprising a plurality of joints, actuators, and bearing surfaces to support an arm of the occupant;
an inertial measuring unit configured to detect kinematic data of the aircraft and to transmit the kinematic data; and
a computing unit configured to:
receive the kinematic data transmitted from the inertial measuring unit;
determine an acceleration at the occupant's seat from the kinematic data; and
control the actuators of the exoskeleton arm to generate a counterforce directed against the acceleration at the occupant's seat in an amount that compensates for inertial forces of the occupant's arm due to the acceleration at the occupant's seat.

2. The system according to claim 1, wherein the system further comprises an inertial arm measuring unit arranged on the exoskeleton arm, the inertial arm measuring unit configured to determine kinematic data of the exoskeleton arm and transmit the kinematic data of the exoskeleton arm to the computing unit, the computing unit being further configured to determine the counterforce from the kinematic data of the aircraft detected by the inertial measuring unit and from the kinematic data of the exoskeleton arm determined by the inertial arm measuring unit, and to control the actuators of the exoskeleton arm in order to apply the counterforce as determined.

3. The system according to claim 1, wherein the exoskeleton arm comprises bio-sensors configured to determine action potentials of the occupant and transmit the action potentials to the computing unit, the computing unit being further configured to determine a movement of the exoskeleton arm desired by the occupant based on the action potentials determined by the bio-sensors, and to control the actuators superimposed on the counterforce in order to apply a force and/or a torque to carry out the movement of the exoskeleton arm desired by the occupant.

4. The system according to claim 1, wherein the computing unit is further configured to determine a spatial direction of the acceleration occurring at the occupants seat, to determine the counterforce along the spatial direction, and to control the actuators of the exoskeleton arm accordingly.

5. The system according to claim 1, wherein the system further comprises an optical tracking system configured to detect a current position and/or a current speed of the exoskeleton arm relative to the cockpit of the aircraft, and to transmit the current position and/or the current speed to the computing unit, the computing unit being further configured to readjust a movement of the exoskeleton arm and/or the counterforce based on the current position and/or the current speed of the exoskeleton arm.

6. The system according to claim 1, wherein the inertial measuring unit is intended to be arranged in the aircraft at a known distance from the occupant's seat along a longitudinal axis of the aircraft, the computing unit being further configured to calculate accelerations at the occupant's seat using the known distance and from the kinematic data of the inertial measuring unit.

7. The system according to claim 1, wherein the exoskeleton arm further comprises respective bearing surfaces for an upper arm and a forearm adjoining the upper arm.

8. The system according to claim 7, wherein the joints of the exoskeleton arm have degrees of freedom configured analogously to degrees of freedom of a human shoulder and a human elbow, such that the occupant's arm accommodated in the exoskeleton arm is capable of performing all movements possible due to its degrees of freedom in the shoulder and the elbow through the exoskeleton arm as well, and the actuators of the exoskeleton arm support all the movements by the counterforce against the acceleration as determined.

9. An aircraft comprising a system according to claim 1.

10. The aircraft according to claim 9, wherein the aircraft comprises a first exoskeleton arm and a second exoskeleton arm, wherein respective exoskeleton arms are mounted on structure of the aircraft structure at shoulder height behind the occupant's seat.

## Revendications

1. Système d'aide d'un passager d'un aéronef (1) pour la commande de cockpit sous des accélérations élevées, comportant une unité de calcul (3), une unité de mesure inertielle (5) et un bras d'exosquelette (7) avec une pluralité d'articulations et d'actionneurs et de surfaces de support pour le soutien d'un bras du passager, sachant que l'unité de mesure inertielle (5) est exécutée pour saisir les données cinématiques de l'aéronef (1) et les transmettre à l'unité de calcul (3), sachant que l'unité de calcul (3) est exécutée pour déterminer une accélération au siège du pilote à partir des données cinématiques saisies de l'unité de mesure inertielle (5) et activer les actionneurs du bras d'exosquelette (7) pour produire une force contraire inverse à l'accélération déterminée sur le siège du pilote à une hauteur qui compense les forces d'inertie du bras du passager en raison de l'accélération déterminée sur le siège du saisies pilote.

2. Système selon la revendication 1,
sachant qu'une unité de mesure de bras inertielle est disposée sur le bras d'exosquelette (7) et est exécutée pour déterminer les données cinématiques du bras d'exosquelette (7) et les transmettre à l'unité de calcul (3), sachant que l'unité de calcul (3) est exécutée pour déterminer la force contraire à partir des données cinématiques (5) de l'aéronef (1) saisies au moyen de l'unité de calcul inertielle et des données cinématiques saisies au moyen de l'unité de mesure de bras inertielle du bras d'exosquelette (7) et activer les actionneurs du bras d'exosquelette (7) pour l'application de la force contraire déterminée.

3. Système selon l'une quelconque des revendications précédentes,
sachant que le bras d'exosquelette (7) comporte des biocapteurs, qui sont exécutés pour déterminer des potentiels d'action du passager et les transmettre à l'unité de calcul (3), sachant que l'unité de calcul (3) est exécutée pour déterminer un mouvement du bras d'exosquelette (7) souhaité par le passager sur la base des potentiels d'action déterminés par les biocapteurs et activer les actionneurs en superposition à la force contraire pour l'application d'une force et/ou d'un couple pour exécuter le mouvement souhaité du bras d'exosquelette (7).

4. Système selon l'une quelconque des revendications précédentes,
sachant que l'unité de calcul (3) est exécutée pour déterminer une direction dans l'espace de l'accélération survenant sur le siège du pilote et définir la force contraire le long de cette direction et activer de façon correspondante les actionneurs de bras d'exosquelette (7).

5. Système selon l'une quelconque des revendications précédentes,
Comportant en plus un système de traçage optique qui est exécuté pour saisir une position actuelle et/ou une vitesse du bras d'exosquelette (7) par rapport au cockpit de l'aéronef (1) et les transmettre à l'unité de calcul (3), sachant que l'unité de calcul (3) est exécutée pour réajuster un mouvement du bras d'exosquelette (7) et/ou la force contraire sur la base de la position déterminée et/ou de la vitesse du bras d'exosquelette (7).

6. Système selon l'une quelconque des revendications précédentes,
sachant que l'unité de mesure inertielle (5) est prévue pour mise en place dans l'aéronef (1) à une distance du siège du pilote le long d'un axe longitudinal de l'aéronef (1), sachant que l'unité de calcul (3) est exécutée pour calculer l'accélération sur le siège du pilote au moyen de la distance connue et à partir des données cinématiques de l'unité de mesure inertielle (5).

7. Système selon l'une quelconque des revendications précédentes,
sachant que l'exosquelette (7) comporte les surfaces de support respectives pour un bras et un avant-bras se raccordant au bras.

8. Système selon la revendication 7,
sachant que l'exosquelette (7) comporte des articulations avec des degrés de liberté, qui sont exécutées de façon analogue aux degrés de liberté de l'épaule humaine et du coude humain de telle sorte que pour le bras logé dans le bras de l'exosquelette (7) du passager tous les mouvements possibles par son degré de liberté dans l'épaule et le coude sont également possibles par le bras d'exosquelette (7) et sont assistés par la force contraire contre l'accélération déterminée par les actionneurs de l'exosquelette (7).

9. Aéronef (1) avec un système selon l'une quelconque des revendications précédentes.

10. Aéronef (1) selon la revendication 9,
sachant que l'aéronef (1) comporte un premier et un deuxième bras d'exosquelette (7), sachant que le bras d'exosquelette (7), est logé à hauteur d'épaule derrière un siège de passager sur la structure d'aéronef.
